(19) Europäisches Patentamt
European Patent Office
Office européen des brevets

(11) **EP 3 311 091 B1**

(12) # FASCICULE DE BREVET EUROPEEN

(45) Date de publication et mention de la délivrance du brevet:
**03.04.2019 Bulletin 2019/14**

(21) Numéro de dépôt: **16739222.4**

(22) Date de dépôt: **15.06.2016**

(51) Int Cl.:
***F28D 20/00*** *(2006.01)*

(86) Numéro de dépôt international:
**PCT/FR2016/051452**

(87) Numéro de publication internationale:
**WO 2016/203153 (22.12.2016 Gazette 2016/51)**

(54) **RESERVOIR DE STOCKAGE THERMIQUE**

WÄRMESPEICHERTANK

HEAT STORAGE TANK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats de validation désignés:
**MA**

(30) Priorité: **16.06.2015 FR 1555509**

(43) Date de publication de la demande:
**25.04.2018 Bulletin 2018/17**

(73) Titulaire: **Commissariat à l'Énergie Atomique et aux Énergies Alternatives**
**75015 Paris (FR)**

(72) Inventeurs:
- **MOLINA, Sophie**
  **38000 Grenoble (FR)**
- **BRUCH, Arnaud**
  **38100 Grenoble (FR)**
- **COUTURIER, Raphaël**
  **38360 Sassenage (FR)**
- **GILLIA, Olivier**
  **Sassenage 38360 (FR)**
- **HUILLE, Arthur**
  **38700 La Tronche (FR)**

(74) Mandataire: **Talbot, Alexandre**
**Cabinet Hecké**
**28 Cours Jean Jaurès**
**38000 Grenoble (FR)**

(56) Documents cités:
**WO-A1-2013/167538**
**WO-A1-2013/167539**
**US-A- 4 405 010**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 311 091 B1

## Description

La présente invention a trait à un réservoir de stockage thermique. Plus précisément, l'invention concerne un réservoir de stockage thermique de type thermocline dual, conforme au préambule de la revendication 1. Un tel réservoir est connu, par exemple, du document US 4,405,010. A titre d'exemple non limitatif, un tel réservoir peut être utilisé dans une centrale solaire, notamment du type à miroir de Fresnel.

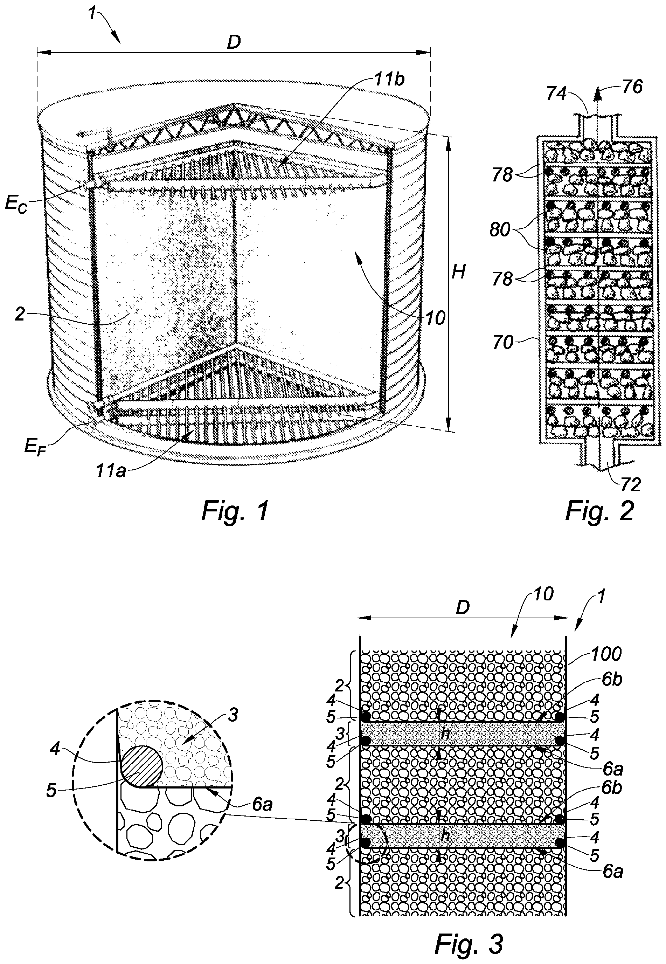

Un réservoir 1 connu de l'état de la technique, illustré à la figure 1, comporte :

- une enceinte 10 comprenant une surface interne délimitant un volume pour le stockage thermique, la surface interne de l'enceinte 10 formant un cylindre présentant une hauteur H et un diamètre D ;
- des strates 2 d'éléments solides d'un matériau de stockage, le matériau de stockage étant adapté pour stocker la chaleur d'un fluide caloporteur circulant dans l'enceinte 10, les strates 2 occupant le volume de l'enceinte 10.

Un tel réservoir 1 de l'état de la technique est de type thermocline. La stratification thermique à l'intérieur de l'enceinte 10 conduit à la présence :

- d'une zone chaude dans une partie supérieure de l'enceinte 10,
- d'une zone froide dans une partie inférieure de l'enceinte 10,
- d'une zone de transition appelée thermocline entre la zone chaude et la zone froide.

Le fluide caloporteur est introduit par le haut du réservoir 1, via une entrée $E_C$, lors d'une phase de stockage afin d'éviter des mouvements de convection naturelle. Le fluide caloporteur est injecté par le bas du réservoir 1, via une entrée $E_F$, lors d'une phase de déstockage, et retiré par le haut du réservoir 1. Le réservoir 1 comporte des premier et second distributeurs 11a, 11b du fluide caloporteur agencés respectivement dans la partie inférieure et dans la partie supérieure de l'enceinte 10. Le fluide caloporteur est distribué dans l'enceinte 10 à une vitesse suffisamment faible (de l'ordre de 1 mm/s) pour assurer un transfert de chaleur efficace entre le fluide caloporteur et les strates 2.

Le principe de ce type de stockage de chaleur est de créer une sorte de piston thermique, c'est-à-dire une avancée d'un front thermique homogène transversalement, afin de maintenir des températures constantes dans la zone chaude et dans la zone froide lors des phases de stockage et de déstockage. Par « transversale(ment) », on entend selon une direction perpendiculaire à l'axe longitudinal du réservoir 1.

Plus précisément, un tel réservoir 1 de l'état de la technique est de type thermocline dual. Les éléments solides des strates 2 forment une matrice solide. Le stockage thermique est assuré à la fois par la matrice solide et par le fluide caloporteur. L'utilisation d'une matrice solide et d'un fluide caloporteur permet de réduire significativement les coûts relativement à un réservoir de stockage thermique n'utilisant qu'un fluide caloporteur. Par « strate », on entend un ensemble d'éléments solides s'étendant dans un plan perpendiculaire à l'axe longitudinal du réservoir (c'est-à-dire un plan horizontal lorsque l'axe longitudinal du réservoir 1 est vertical). Les éléments solides de chaque strate 2 sont sans ordre, pêle-mêle, préférentiellement avec plusieurs granulométries. En effet, le matériau de stockage de la matrice solide est « en vrac » au sens où il est intrinsèquement sans ordre, pêle-mêle. En outre, la matrice solide comporte classiquement plusieurs granulométries afin de réduire l'espace libre au sein de la matrice solide.

Un tel réservoir 1 de l'état de la technique n'est pas entièrement satisfaisant dans la mesure où la stratification thermique n'est pas parfaitement uniforme, ce qui conduit à une inhomogénéité du front thermique. Des chemins thermiques préférentiels apparaissent alors dans l'enceinte 10, se traduisant par exemple par la présence d'un fluide caloporteur chaud dans des portions de la zone froide du réservoir 1 en phase de stockage, limitant par là-même le bon fonctionnement du réservoir 1.

En outre, un tel réservoir 1 de l'état de la technique est soumis au problème de l'effet de cliquet thermique (« thermal *ratcheting effect* » en langue anglaise). Au cours des différentes phases de stockage, le matériau de l'enceinte 10 se dilate différemment de la matrice solide et libère un espace entre la matrice solide et la surface interne de l'enceinte 10. Cet espace est ensuite comblé par des éléments solides de la matrice solide, la matrice solide diminuant ainsi de hauteur. Au cours des différentes phases de déstockage, le matériau de l'enceinte 10 se rétracte et est contraint par les éléments solides de la matrice solide qui ont comblé l'espace. Le premier distributeur 11a agencé dans la partie inférieure de l'enceinte 10, et noyé dans la matrice solide, est également soumis à d'importantes contraintes. Il est connu de l'état de la technique de concevoir un cylindre vérifiant $H/D<1$ afin de réduire l'effet de cliquet thermique. Toutefois, ce type de géométrie rend plus délicat l'obtention d'une distribution homogène du fluide caloporteur suivant une direction transversale (c'est-à-dire horizontale lorsque l'axe longitudinal du réservoir 1 est vertical).

Afin de pallier le problème d'inhomogénéité du front thermique, il est connu de l'état de la technique, notamment du document US 4,405,010, d'interposer au moins un empilement d'éléments solides d'un matériau thermiquement conducteur entre deux strates 80 d'éléments solides successives, comme illustré à la figure 2. Chaque empilement d'éléments solides comporte une première pile de matrices 78 de métal (ou cordiérite ou mullite) et une seconde pile formée par une tige 78 de métal (ou cordiérite ou mullite), cf. figure 2, et col.9, l. 24-35. Chaque empilement vise à limiter fortement le gradient thermique transversal au sein de l'enceinte 10, en utilisant la conductivité thermique élevée des matrices 78 pour améliorer l'homogénéité du front thermique.

Cependant, un tel réservoir de l'état de la technique n'est pas entièrement satisfaisant dans la mesure où les matrices 78 de métal sont susceptibles d'interférer avec les strates 80 d'éléments solides au fur et à mesure des cycles de stockage/déstockage. Des chemins thermiques préférentiels peuvent alors apparaitre dans l'enceinte 10, avec comme conséquence une inhomogénéité du front thermique limitant les performances du réservoir.

Ainsi, la présente invention vise à remédier en tout ou partie aux inconvénients précités, et concerne à cet effet un réservoir de stockage thermique, comportant :

- une enceinte comprenant une surface interne délimitant un volume pour le stockage thermique ;
- des strates d'éléments solides d'un matériau de stockage, le matériau de stockage étant adapté pour stocker la chaleur d'un fluide caloporteur circulant dans l'enceinte, les strates occupant le volume de l'enceinte ;
- au moins un empilement d'éléments solides d'un matériau thermiquement conducteur, l'empilement étant interposé entre deux strates successives ;

le réservoir étant remarquable en ce qu'il comporte des moyens de séparation configurés pour séparer les éléments solides des strates et les éléments solides de l'empilement, et en ce que les moyens de séparation sont configurés pour autoriser une circulation du fluide caloporteur à travers l'empilement.

Par « strate », on entend un ensemble d'éléments solides s'étendant dans un plan perpendiculaire à l'axe longitudinal du réservoir (c'est-à-dire un plan horizontal lorsque l'axe longitudinal du réservoir est vertical). Les éléments solides de chaque strate 2 sont sans ordre, pêle-mêle, préférentiellement avec plusieurs granulométries. Les éléments solides des strates 2 forment une matrice solide. Le matériau de stockage de la matrice solide est « en vrac » au sens où il est intrinsèquement sans ordre, pêle-mêle. La matrice solide comporte avantageusement plusieurs granulométries afin de réduire l'espace libre au sein de la matrice solide.

Ainsi, un tel réservoir selon l'invention permet de s'affranchir d'un mélange entre les éléments solides des strates et les éléments solides de l'empilement grâce aux moyens de séparation. Dans l'état de la technique, il existe une ségrégation naturelle en milieu granulaire régie par l'effet « Noix du Brésil ». Cet effet conduit les éléments solides de l'empilement, de plus petite taille, à s'entasser sous les éléments solides des strates, de plus grande taille, au fur et à mesure des cycles de stockage/déstockage. Des chemins thermiques préférentiels apparaissent donc dans l'enceinte, avec comme conséquence une inhomogénéité du front thermique limitant les performances du réservoir.

En d'autres termes, les moyens de séparation de l'invention permettent d'éviter cette ségrégation naturelle des éléments solides des strates et de l'empilement, et par là-même de conserver une bonne homogénéité du front thermique au fur et à mesure des cycles de stockage/déstockage. Les moyens de séparation de l'invention sont hermétiques au sens où les moyens de séparation interdisent un passage ou une pénétration des éléments solides des strates et des éléments solides de l'empilement.

Le matériau de stockage est distinct du matériau thermiquement conducteur.

Par « thermiquement conducteur », on entend que le matériau présente une conductivité thermique à 20°C supérieure ou égale à 14 $W.m^{-1}.K^{-1}$.

Dans un mode de réalisation, les moyens de séparation comportent :

- un rebord s'étendant sur un pourtour de la surface interne de l'enceinte ;
- un organe de plaquage agencé pour plaquer le rebord contre la surface interne de l'enceinte.

Ainsi, de tels moyens de séparation sont maintenus en position à la surface interne de l'enceinte par plaquage, sans nécessiter de fixation. Une fixation des moyens de séparation à la surface interne de l'enceinte serait techniquement complexe, en particulier pour des réservoirs de grande taille. En outre, les zones de fixation seraient soumises à des contraintes mécaniques d'autant plus fortes que la différence entre les coefficients de dilatation thermique du matériau de stockage et du matériau de l'enceinte est élevée.

Selon une forme d'exécution, l'organe de plaquage comporte un ressort monté comprimé contre le rebord.

Dans un mode de réalisation, l'empilement est interposé entre deux strates successives de manière à délimiter des strates supérieures et des strates inférieures de part et d'autre de l'empilement ; et les moyens de séparation comportent :

- une grille supérieure interposée entre les strates supérieures et l'empilement, et
- une grille inférieure interposée entre l'empilement et les strates inférieures.

Selon une forme d'exécution, la grille supérieure comporte des mailles adaptées pour la rétention des éléments solides des strates supérieures ; la grille inférieure comporte des mailles adaptées pour la rétention des éléments solides de l'empilement ; les mailles de la grille supérieure et de la grille inférieure étant adaptées pour autoriser la circulation du fluide caloporteur à travers l'empilement.

Dans un mode de réalisation, l'enceinte est d'un matériau présentant un coefficient de dilatation thermi-

que $\alpha_1$ ; le matériau de stockage présente un coefficient de dilatation thermique $\alpha_2$ vérifiant $\alpha_2 < \alpha_1$ ; le matériau thermiquement conducteur présente un coefficient de dilatation thermique $\alpha_3$, le matériau thermiquement conducteur étant choisi de sorte que $\alpha_2 < \alpha_1 \leq \alpha_3$.

Ainsi, par un choix avisé du matériau thermiquement conducteur, chaque empilement forme des zones de relâchement des contraintes mécaniques de la surface interne de l'enceinte lors des phases de stockage/déstockage. Le relâchement des contraintes mécaniques est d'autant plus important que la différence ($\alpha_3 - \alpha_1$) est faible. Les zones de relâchement des contraintes mécaniques sont situées sur la hauteur des parties latérales de chaque empilement en contact avec la surface interne de l'enceinte. L'effet de cliquet thermique est réduit dans ces zones de relâchement de contraintes.

En outre, lorsque les moyens de séparation comportent un rebord s'étendant sur un pourtour de la surface interne de l'enceinte, la hauteur du rebord permet de compenser en partie l'effet de la différence de coefficients de dilatation thermique ($\alpha_3 - \alpha_1$). Au cours des différentes phases de stockage, le matériau de l'enceinte se dilate et libère un espace entre la matrice solide et la surface interne de l'enceinte. Cet espace est fermé par le rebord des moyens de séparation qui empêche les éléments solides des strates de pénétrer cet espace. Pour ce faire, le rebord est dimensionné en prenant compte la dimension de la paroi de l'enceinte délimitant la surface interne. Par exemple, pour un réservoir cylindrique de section circulaire, la hauteur du rebord doit être supérieure à la variation maximale du rayon du réservoir par dilatation thermique. Un facteur de sécurité de 1,5 sur la hauteur du rebord est conseillé. Au cours des différentes phases de déstockage, le matériau de l'enceinte se rétracte et n'est plus contraint par les éléments solides des strates.

Le choix du matériau thermiquement conducteur est critique. Au cours des différentes phases de stockage, le matériau de l'enceinte se dilate différemment de la matrice solide ($\alpha_2 < \alpha_1$) et libère un espace entre la matrice solide et la surface interne de l'enceinte. Si la relation suivante $\alpha_2 < \alpha_3 < \alpha_1$ est vérifiée, ou si la relation suivante $\alpha_3 < \alpha_2 < \alpha_1$ est vérifiée, alors le rebord des moyens de séparation ne suffit pas à lui-seul à retenir le matériau de stockage de la matrice solide.

Dans un mode de réalisation, l'enceinte comporte une partie inférieure et une partie supérieure ; le réservoir comporte :

- des premier et second distributeurs du fluide caloporteur agencés respectivement dans la partie inférieure et dans la partie supérieure de l'enceinte ;
- des empilements additionnels d'éléments solides du matériau thermiquement conducteur, les empilements additionnels étant agencés pour envelopper les premier et second distributeurs.

Ainsi, de tels empilements additionnels permettent d'éviter que les premier et second distributeurs ne soient soumis à d'importantes contraintes mécaniques au cours des phases de stockage/déstockage. Il en résulte une augmentation de la durée de vie des distributeurs.

Selon une forme d'exécution, les éléments solides de chaque empilement comportent des billes, de préférence présentant un diamètre compris entre 5 mm et 50 mm.

Avantageusement, chaque empilement présente une porosité comprise entre 30% et 50%.

L'homogénéité du front thermique dépend principalement de la porosité de l'empilement, de la conductivité thermique du matériau thermiquement conducteur et de la vitesse de circulation du fluide caloporteur dans l'enceinte. Une porosité comprise entre 30% et 50% laisse un volume de pores suffisant pour être occupé par le fluide caloporteur. Une plus grande porosité demanderait un excès de fluide caloporteur avec un coût élevé associé. L'homogénéité de température est obtenue par un remélange du fluide caloporteur dans les pores, et par conduction thermique. Les éléments solides de chaque empilement comportent avantageusement une seule granulométrie afin d'améliorer l'homogénéité de température par remélange et conduction thermique. L'ordre de grandeur de la vitesse de circulation du fluide caloporteur dans l'enceinte est de préférence 1 mm/s.

Selon une forme d'exécution, le matériau thermiquement conducteur est un matériau métallique, de préférence un acier.

Ainsi, un tel matériau thermiquement conducteur convient tout particulièrement lorsque la paroi de l'enceinte, délimitant la surface interne de l'enceinte, est d'un matériau de type acier, et ce afin de réduire ($\alpha_3 - \alpha_1$) le plus possible.

Selon une forme d'exécution, les éléments solides des strates comportent des roches et de préférence du sable, les roches étant de préférence alluvionnaires.

Les roches sont préférentiellement riches en silice, préférentiellement de type quartzite.

Les éléments solides des strates comportent avantageusement une double granulométrie afin de réduire l'espace libre au sein de la matrice solide, et par là-même la proportion de fluide caloporteur dans le réservoir.

Selon une forme d'exécution, le fluide caloporteur est un liquide ou un gaz, le liquide étant de préférence une huile, le gaz étant de préférence l'air.

Selon une forme d'exécution, la surface interne de l'enceinte forme un cylindre présentant une hauteur H et un diamètre D ; le cylindre vérifie de préférence $1 \leq \frac{H}{D} \leq 2{,}5$ ; plus préférentiellement $1{,}5 \leq \frac{H}{D} \leq 2{,}5$ ; encore plus préférentiellement $2 \leq \frac{H}{D} \leq 2{,}5$.

Ainsi, de telles formes de l'enceinte facilitent une distribution homogène du fluide caloporteur suivant une direction transversale. De telles formes sont avantageusement obtenues avec un matériau thermiquement conducteur vérifiant $\alpha_2 < \alpha_1 \leq \alpha_3$ de manière à éviter l'effet de cliquet thermique.

Avantageusement, chaque empilement présente une hauteur h vérifiant $0,05 \leq \frac{h}{D} \leq 0,15.$

Ainsi, la hauteur h de chaque empilement est choisie suffisamment élevée de manière à obtenir un relâchement satisfaisant des contraintes mécaniques de la surface interne de l'enceinte, lorsque le matériau thermiquement conducteur vérifie $\alpha_2 < \alpha_1 \leq \alpha_3$, et de manière à obtenir une homogénéité satisfaisante du front thermique. La hauteur h de chaque empilement est choisie suffisamment faible de manière à ne pas alourdir le réservoir et pour des raisons de coût.

Si l'on considère un premier empilement présentant une hauteur $h_1$ et un deuxième empilement présentant une hauteur $h_2$, le premier empilement s'étendant suivant une partie centrale du réservoir, le deuxième empilement s'étendant suivant une partie périphérique du réservoir (c'est-à-dire une partie inférieure ou supérieure), la hauteur $h_1$ est avantageusement choisie de sorte que $h_1 > h_2$ afin de réduire le plus efficacement l'effet de cliquet thermique. Les deuxièmes empilements en partie périphérique permettent une homogénéisation transversale en sortie du stockage, ce qui permet de lisser l'évolution de la température de sortie du stockage. Une température de sortie stable est plus favorable vis-à-vis des performances en sortie de stockage.

Dans un mode de réalisation, le ou chaque empilement est interposé entre deux strates successives de manière à délimiter des strates supérieures et des strates inférieures de part et d'autre de l'empilement correspondant ; le ou les empilements sont répartis dans l'enceinte de sorte que les strates supérieures et les strates inférieures délimitées par le ou les empilements occupent des volumes égaux dans l'enceinte avec une tolérance de 15%.

D'autres caractéristiques et avantages apparaîtront dans la description qui va suivre de différents modes de réalisation de l'invention, donnés à titre d'exemples non limitatifs, en référence aux dessins annexés dans lesquels :

- la figure 1 (déjà commentée) est une vue schématique en perspective d'un réservoir de l'état de la technique,
- la figure 2 (déjà commentée) est une vue schématique en coupe d'un réservoir de l'état de la technique,
- la figure 3 est une vue schématique en coupe d'un réservoir selon l'invention,
- la figure 4 est une vue schématique en perspective d'un réservoir selon l'invention,
- la figure 5 est une vue schématique en perspective illustrant un empilement additionnel enveloppant un distributeur de fluide caloporteur,
- la figure 6 est une vue schématique de dessus illustrant un empilement additionnel enveloppant un distributeur de fluide caloporteur,
- la figure 7 est une vue schématique en coupe d'un réservoir selon l'invention,
- la figure 8 est une vue schématique partielle en coupe d'un réservoir selon l'invention,
- la figure 9 est une vue schématique de dessus des éléments solides des strates.

Pour les différents modes de réalisation, les mêmes références seront utilisées pour des éléments identiques ou assurant la même fonction, par souci de simplification de la description. Les caractéristiques techniques décrites ci-après pour différents modes de réalisation sont à considérer isolément ou selon toute combinaison techniquement possible.

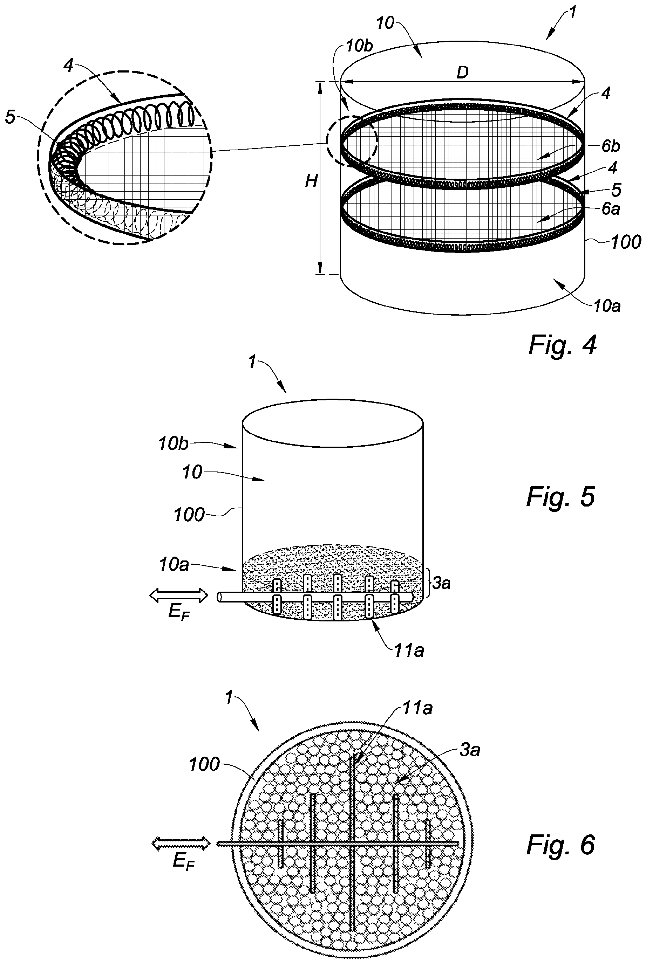

Le réservoir illustré aux figures 3 à 8 est un réservoir 1 de stockage thermique, comportant :

- une enceinte 10 comprenant une surface interne 100 délimitant un volume pour le stockage thermique ;
- des strates 2 d'éléments solides d'un matériau de stockage, le matériau de stockage étant adapté pour stocker la chaleur d'un fluide caloporteur circulant dans l'enceinte 10, les strates 2 occupant le volume de l'enceinte ;
- au moins un empilement 3 d'éléments solides d'un matériau thermiquement conducteur, l'empilement 3 étant interposé entre deux strates 2 successives.

Le réservoir 1 comporte des moyens de séparation configurés pour séparer les éléments solides des strates 2 et les éléments solides de l'empilement 3. Les moyens de séparation sont configurés pour autoriser une circulation du fluide caloporteur à travers l'empilement 3.

La surface interne 100 de l'enceinte 10 forme avantageusement un cylindre présentant une hauteur H et un diamètre D. A titre d'exemple, D est supérieur à 10 m, de préférence supérieur à 15 m. Le cylindre vérifie de préférence $1 \leq \frac{H}{D} \leq$ 2,5 ; plus préférentiellement $1,5 \leq \frac{H}{D} \leq 2,5$ ; encore plus préférentiellement $2 \leq \frac{H}{D} \leq 2,5.$ L'enceinte 10 est d'un matériau présentant un coefficient de dilatation thermique $\alpha_1$. Le matériau de l'enceinte 10 est avantageusement un acier, de préférence inoxydable. L'acier présente un coefficient de dilatation thermique $\alpha_1$ à 20°C compris entre $10x10^{-6}$ $K^{-1}$ et $20x10^{-6}$ $K^{-1}$. L'enceinte 10 comporte une partie inférieure 10a et une partie supérieure 10 b.

Le réservoir 1 comporte avantageusement des premier et second distributeurs 11a, 11b du fluide caloporteur agencés respectivement dans la partie inférieure 10a et dans la partie supérieure 10b de l'enceinte 10. Le premier distributeur 11a comporte une entrée $E_F$ du fluide caloporteur. Le second distributeur 11b comporte une entrée $E_C$ du fluide caloporteur. Le fluide caloporteur est introduit par le haut du réservoir 1, via l'entrée $E_C$, lors d'une phase de stockage afin d'éviter des mouvements de convection naturelle. A titre d'exemple, la température du fluide caloporteur introduit via l'entrée $E_C$ est de l'ordre de 250°C. Le fluide caloporteur est introduit par le bas du réservoir 1, via l'entrée $E_F$, lors d'une phase de déstockage. A titre d'exemple, la température du fluide caloporteur introduit via l'entrée $E_F$ est de l'ordre de 100°C. Le fluide caloporteur est distribué dans l'enceinte 10 par les premier et second distributeurs 11a, 11b à une vitesse dans l'enceinte 10 suffisamment faible (de l'ordre d'1 mm/s) pour assurer un transfert de chaleur efficace entre le fluide caloporteur et les strates 2.

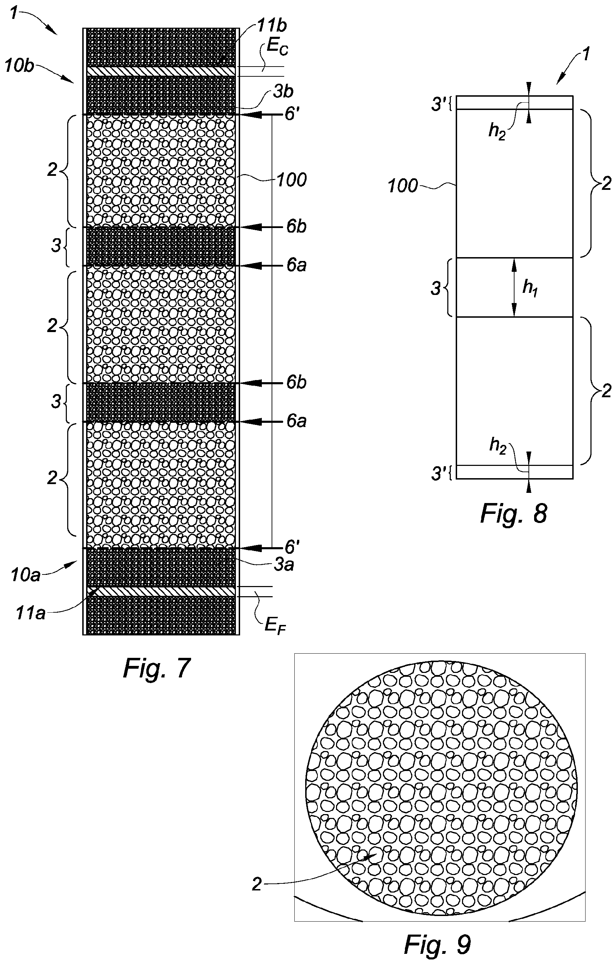

Le matériau de stockage présente un coefficient de dilatation thermique $\alpha_2$. Le matériau de stockage est inerte relativement au fluide caloporteur. Comme illustré à la figure 9, les éléments solides des strates 2 comportent avantageusement des roches et de préférence du sable, les roches étant de préférence alluvionnaires, préférentiellement riches en silice, préférentiellement de type quartzite. Les roches présentent un coefficient de dilatation thermique $\alpha_2$ à 20°C compris entre $2 \times 10^{-6}$ $K^{-1}$ et $7 \times 10^{-6}$ $K^{-1}$. Le fluide caloporteur est un liquide ou un gaz. Le liquide caloporteur est de préférence une huile telle qu'une huile synthétique. Le liquide caloporteur peut être également un sel fondu. Le gaz caloporteur est de préférence l'air. Le matériau de stockage est avantageusement choisi selon :

- sa capacité de stockage thermique ρ Cp, où ρ est la masse volumique, et Cp la chaleur spécifique,
- sa conductivité thermique,
- sa compatibilité avec le fluide caloporteur,
- sa température maximale d'utilisation,
- son prix.

Les éléments solides des strates 2 forment une matrice solide. Le stockage thermique est assuré à la fois par la matrice solide et par le fluide caloporteur. L'utilisation d'une matrice solide et d'un fluide caloporteur permet de réduire significativement les coûts relativement à un réservoir de stockage thermique n'utilisant qu'un fluide caloporteur. Le matériau de stockage des éléments solides des strates 2 est « en vrac » au sens où il est intrinsèquement sans ordre, pêle-mêle. En outre, la matrice solide comporte classiquement plusieurs granulométries (par exemple quelques cm et quelques mm de diamètre moyen) afin de réduire l'espace libre pour le fluide caloporteur au sein de la matrice solide. A titre d'exemple, chaque strate 2 présente une porosité comprise entre 25% et 30%, de préférence 27%.

Le matériau thermiquement conducteur présente un coefficient de dilatation thermique $\alpha_3$. Le matériau thermiquement conducteur est inerte relativement au fluide caloporteur. Le matériau thermiquement conducteur est avantageusement choisi de sorte que $\alpha_2 < \alpha_1 \leq \alpha_3$. Chaque empilement 3 contribue à un relâchement des contraintes mécaniques subies par la surface interne 100 de l'enceinte 10. Le matériau thermiquement conducteur est avantageusement adapté au stockage thermique afin de ne pas réduire la capacité de stockage du réservoir 1. Le matériau thermiquement conducteur est avantageusement choisi de sorte que sa capacité de stockage thermique est supérieure ou égale à la capacité de stockage thermique du matériau de stockage de la matrice solide.

Le matériau thermiquement conducteur est avantageusement un matériau métallique, de préférence un acier, de sorte que la différence ($\alpha_3$- $\alpha_1$) est la plus faible possible. Chaque empilement 3 présente une hauteur h vérifiant $0,05 \leq \frac{h}{D} \leq 0,15$ . Les éléments solides de chaque empilement 3 comportent avantageusement des billes, de préférence présentant un diamètre compris entre 5 mm et 50 mm. Les billes peuvent être issues de roulements à billes déclassés. Les billes peuvent être de la grenaille. Chaque empilement 3 présente avantageusement une porosité comprise entre 30% et 50%. Si l'on considère un premier empilement 3 présentant une hauteur $h_1$ et un deuxième empilement 3' présentant une hauteur $h_2$, le premier empilement 3 s'étendant suivant une partie centrale du réservoir 1, le deuxième empilement 3' s'étendant suivant une partie périphérique du réservoir 1 (c'est-à-dire une partie inférieure ou supérieure), la hauteur $h_1$ est avantageusement choisie de sorte que $h_1 > h_2$ afin de réduire le plus efficacement l'effet de cliquet thermique, comme illustré à la figure 8. Par ailleurs, une telle configuration géométrique des premier et deuxième empilements 3, 3' est également avantageuse d'un point de vue thermique afin d'améliorer l'homogénéisation du front thermique aux parties périphériques du réservoir 1.

Le réservoir 1 comporte avantageusement des empilements additionnels 3a, 3b d'éléments solides du matériau thermiquement conducteur, les empilements additionnels 3a, 3b étant agencés pour respectivement envelopper les premier et second distributeurs 11a, 11b.

Comme illustré à la figure 7, chaque empilement 3 est interposé entre deux strates 2 successives de manière à délimiter des strates 2 supérieures et des strates 2 inférieures de part et d'autre de l'empilement 3 correspondant. Les empilements 3 sont avantageusement répartis dans l'enceinte 10 de sorte que les strates 2 supérieures et les strates 2 inférieures délimitées par les empilements 3 occupent des volumes égaux dans l'enceinte avec une tolérance de 15%.

Les moyens de séparation comportent avantageusement :

- un rebord 4 s'étendant sur un pourtour de la surface interne 100 de l'enceinte 10;
- un organe de plaquage 5 agencé pour plaquer le rebord 4 contre la surface interne 100 de l'enceinte 10.

L'organe de plaquage 5 comporte avantageusement un ressort monté comprimé contre le rebord 4. Le ressort est avantageusement d'un matériau métallique. Le ressort présente avantageusement une forme torique.

Les moyens de séparation comportent avantageusement :

- une grille supérieure 6b interposée entre les strates 2 supérieures et l'empilement 3 correspondant, et
- une grille inférieure 6a interposée entre l'empilement 3 correspondant et les strates 2 inférieures.

La grille supérieure 6b comporte des mailles adaptées pour la rétention des éléments solides des strates 2 supérieures. La grille inférieure 6a comporte des mailles adaptées pour la rétention des éléments solides de l'empilement 3 correspondant. Les mailles de la grille supérieure 6b et de la grille inférieure 6a sont adaptées pour autoriser la circulation du fluide caloporteur à travers l'empilement 3 correspondant.

Comme illustré à la figure 7, le réservoir 1 comporte des grilles additionnelles 6' interposées entre les strates 2 et les empilements additionnels 3a, 3b.

Le rebord 4 s'étend dans le prolongement de chaque grille 6a, 6b, 6'. Chaque grille 6a, 6b, 6' présente une section horizontale circulaire avec un diamètre supérieure à D de sorte que le rebord 4 correspondant comporte une surface d'appui contre la surface interne 100 de l'enceinte 10. Chaque grille 6a, 6b, 6' est d'un matériau compatible avec le matériau de stockage et le fluide caloporteur. Le matériau de chaque grille 6a, 6b, 6' est avantageusement un acier, de préférence inoxydable.

## Revendications

1. Réservoir (1) de stockage thermique, comportant :

   - une enceinte (10) comprenant une surface interne (100) délimitant un volume pour le stockage thermique ;
   - des strates (2) d'éléments solides d'un matériau de stockage, le matériau de stockage étant adapté pour stocker la chaleur d'un fluide caloporteur circulant dans l'enceinte (10), les strates (2) occupant le volume de l'enceinte (10) ;
   - au moins un empilement (3) d'éléments solides d'un matériau thermiquement conducteur, l'empilement (3) étant interposé entre deux strates (2) successives ; le réservoir (1) étant **caractérisé en ce qu'**il comporte des moyens de séparation configurés pour séparer les éléments solides des strates (2) et les éléments solides de l'empilement (3), et **en ce que** les moyens de séparation sont configurés pour autoriser une circulation du fluide caloporteur à travers l'empilement (3).

2. Réservoir (1) selon la revendication 1, dans lequel les moyens de séparation comportent :

   - un rebord (4) s'étendant sur un pourtour de la surface interne (100) de l'enceinte (10) ;
   - un organe de plaquage (5) agencé pour plaquer le rebord (4) contre la surface interne (100) de l'enceinte (10).

3. Réservoir (1) selon la revendication 2, dans lequel l'organe de plaquage (5) comporte un ressort monté comprimé contre le rebord (4).

4. Réservoir (1) selon l'une des revendications 1 à 3, dans lequel l'empilement (3) est interposé entre deux strates (2) successives de manière à délimiter des strates (2) supérieures et des strates (2) inférieures de part et d'autre de l'empilement (3) ; et les moyens de séparation comportent :

   - une grille supérieure (6b) interposée entre les strates (2) supérieures et l'empilement (3), et
   - une grille inférieure (6a) interposée entre l'empilement (3) et les strates (2) inférieures.

5. Réservoir (1) selon la revendication 4, dans lequel la grille supérieure (6b) comporte des mailles adaptées pour la rétention des éléments solides des strates (2) supérieures ; la grille inférieure (6a) comporte des mailles adaptées pour la rétention des éléments solides de l'empilement (3) ; les mailles de la grille supérieure (6b) et de la grille inférieure (6a) étant adaptées pour autoriser la circulation du fluide caloporteur à travers l'empilement (3).

6. Réservoir (1) selon l'une des revendications 1 à 5, dans lequel l'enceinte (10) est d'un matériau présentant un coefficient de dilatation thermique $\alpha_1$ ; le matériau de stockage présente un coefficient de dilatation thermique $\alpha_2$ vérifiant $\alpha_2 < \alpha_1$ ; le matériau thermiquement conducteur présente un coefficient de dilatation thermique $\alpha_3$, le matériau thermiquement conducteur étant choisi de sorte que $\alpha_2 < \alpha_1 \leq \alpha_3$.

7. Réservoir (1) selon l'une des revendications 1 à 6, dans lequel l'enceinte (10) comporte une partie inférieure (10a) et une partie supérieure (10b); le réservoir (1) comporte :

   - des premier et second distributeurs (11a, 11b) du fluide caloporteur agencés respectivement dans la partie inférieure (10a) et dans la partie supérieure (10b) de l'enceinte (10) ;
- des empilements additionnels (3a, 3b) d'éléments solides du matériau thermiquement conducteur, les empilements additionnels (3a, 3b) étant agencés pour envelopper les premier et second distributeurs (11a, 11b).

**8.** Réservoir (1) selon l'une des revendications 1 à 7, dans lequel les éléments solides de chaque empilement (3) comportent des billes, de préférence présentant un diamètre compris entre 5 mm et 50 mm.

**9.** Réservoir (1) selon l'une des revendications 1 à 8, dans lequel chaque empilement (3) présente une porosité comprise entre 30% et 50%.

**10.** Réservoir (1) selon l'une des revendications 1 à 9, dans lequel le matériau thermiquement conducteur est un matériau métallique, de préférence un acier.

**11.** Réservoir (1) selon l'une des revendications 1 à 10, dans lequel les éléments solides des strates (2) comportent des roches et de préférence du sable, les roches étant de préférence alluvionnaires.

**12.** Réservoir (1) selon l'une des revendications 1 à 11, dans lequel le fluide caloporteur est un liquide ou un gaz, le liquide étant de préférence une huile, le gaz étant de préférence l'air.

**13.** Réservoir (1) selon l'une des revendications 1 à 12, dans lequel la surface interne (100) de l'enceinte (10) forme un cylindre présentant une hauteur H et un diamètre D ; le cylindre vérifie de préférence $1 \leq \frac{H}{D} \leq 2{,}5$ ; plus préférentiellement $1{,}5 \leq \frac{H}{D} \leq 2{,}5$ ; encore plus préférentiellement $2 \leq \frac{H}{D} \leq 2{,}5.$

**14.** Réservoir (1) selon la revendication 13, dans lequel chaque empilement (3) présente une hauteur h vérifiant 0,05 $\leq \frac{h}{D} \leq 0{,}15.$

**15.** Réservoir (1) selon l'une des revendications 1 à 14, dans lequel le ou chaque empilement (3) est interposé entre deux strates (2) successives de manière à délimiter des strates (2) supérieures et des strates (2) inférieures de part et d'autre de l'empilement (3) correspondant ; le ou les empilements (3) sont répartis dans l'enceinte (10) de sorte que les strates (2) supérieures et les strates inférieures (2) délimitées par le ou les empilements (3) occupent des volumes égaux dans l'enceinte (10) avec une tolérance de 15%.

**Patentansprüche**

**1.** Behälter (1) zur Wärmespeicherung, der umfasst:

- einen geschlossenen Raum (10) mit einer Innenfläche (100), die einen Innenraum für die Wärmespeicherung umgrenzt,
- Schichten (2) von Festkörper-Elementen aus einem Speicherungsmaterial, wobei das Speicherungsmaterial geeignet ist, die Wärme eines in dem geschlossenen Raum (10) zirkulierenden Wärmeträger-Fluids zu speichern, wobei die Schichten (2) den Innenraum des geschlossenen Raums (10) einnehmen,
- mindestens einen Stapel (3) von Festkörper-Elementen aus einem wärmeleitenden Material, wobei der Stapel (3) zwischen zwei aufeinander folgenden Schichten (2) angeordnet ist,

**dadurch gekennzeichnet,**
**dass** er Trennmittel enthält, die so ausgeführt sind, dass sie die Festkörper-Elemente der Schichten (2) und die Festkörper-Elemente des Stapels (3) voneinander trennen, und
**dass** die Trennmittel so ausgeführt sind, dass sie ein Zirkulieren des Wärmeträger-Fluids quer durch den Stapel (3) zulassen.

**2.** Behälter (1) nach Anspruch 1, wobei die Trennmittel aufweisen:

- einen Kranz (4), der sich über einen Außenumfang der Innenfläche (100) des geschlossenen Raums (10) erstreckt,
- ein Andruckteil (5), das dazu vorgesehen ist, den Kranz (4) an die Innenfläche (100) des geschlossenen Raums (10) zu drücken.

**3.** Behälter (1) nach Anspruch 2, wobei das Andruckteil (5) eine Feder umfasst, die unter Spannung an dem Kranz (4) eingesetzt ist.

**4.** Behälter (1) nach einem der Ansprüche 1 bis 3, wobei der Stapel (3) dergestalt zwischen zwei aufeinander folgenden Schichten (2) angeordnet ist, dass er obere Schichten (2) und untere Schichten (2) beiderseits des Stapels (3) abgrenzt, und die Trennmittel aufweisen:

- ein oberes Gitter (6b), das zwischen den oberen Schichten (2) und dem Stapel (3) angeordnet ist, und
- ein unteres Gitter (6a), das zwischen dem Stapel (3) und den unteren Schichten (2) angeordnet ist.

**5.** Behälter (1) nach Anspruch 4, wobei das obere Gitter (6b) Maschen aufweist, die zum Halten der Festkörper-Elemente der oberen Schichten (2) geeignet sind, wobei das untere Gitter (6a) Maschen aufweist, die zum Halten der Festkörper-Elemente des Stapels (3) geeignet sind, wobei die Maschen des oberen Gitters (6b) und des unteren Gitters (6a) geeignet sind, das Zirkulieren des Wärmeträger-Fluids quer durch den Stapel (3) zuzulassen.

**6.** Behälter (1) nach einem der Ansprüche 1 bis 5, wobei der geschlossene Raum (10) aus einem Material mit einem Wärmeausdehnungskoeffizient $\alpha_1$ besteht, wobei das Speicherungsmaterial einen Wärmeausdehnungskoeffizient $\alpha_2$ aufweist, für den gilt: $\alpha_2 < \alpha_1$, wobei das wärmeleitende Material einen Wärmeausdehnungskoeffizient $\alpha_3$ aufweist, wobei das wärmeleitende Material so gewählt ist, dass $\alpha_2 < \alpha_1 \leq \alpha_3$.

**7.** Behälter (1) nach einem der Ansprüche 1 bis 6, wobei der geschlossene Raum (10) einen unteren Teil (10a) und einen oberen Teil (10b) enthält, wobei der Behälter (1) aufweist:

- einen ersten und einen zweiten Verteiler (11a, 11b) für das Wärmeträger-Fluid, die im unteren Teil (10a) bzw. im oberen Teil (10b) des geschlossenen Raums (10) angeordnet sind,
- zusätzliche Stapel (3a, 3b) von Festkörper-Elementen aus dem wärmeleitenden Material, wobei die zusätzlichen Stapel (3a, 3b) so angeordnet sind, dass sie den ersten und den zweiten Verteiler (11a, 11b) umhüllen.

**8.** Behälter (1) nach einem der Ansprüche 1 bis 7, wobei die Festkörper-Elemente jedes Stapels (3) Kugeln enthalten, die vorzugsweise einen Durchmesser von 5 mm bis 50 mm aufweisen.

**9.** Behälter (1) nach einem der Ansprüche 1 bis 8, wobei jeder Stapel (3) eine Porosität aufweist, die zwischen 30% und 50% liegt.

**10.** Behälter (1) nach einem der Ansprüche 1 bis 9, wobei das wärmeleitende Material ein metallischer Werkstoff ist, vorzugsweise ein Stahl.

**11.** Behälter (1) nach einem der Ansprüche 1 bis 10, wobei die Festkörper-Elemente der Schichten (2) aus Gesteinen und vorzugsweise Sand bestehen, wobei die Gesteine vorzugsweise Schwemmgesteine sind.

**12.** Behälter (1) nach einem der Ansprüche 1 bis 11, wobei das Wärmeträger-Fluid eine Flüssigkeit oder ein Gas ist, wobei die Flüssigkeit vorzugsweise ein Öl ist, wobei das Gas vorzugsweise Luft ist.

**13.** Behälter (1) nach einem der Ansprüche 1 bis 12, wobei die Innenfläche (100) des geschlossenen Raums (10) einen Zylinder mit einer Höhe H und einem Durchmesser D bildet, wobei für den Zylinder vorzugsweise gilt: $1 \leq H/D \leq 2{,}5$, und bevorzugter: $1{,}5 \leq H/D \leq 2{,}5$, und noch bevorzugter: $2 \leq H/D \leq 2{,}5$.

**14.** Behälter (1) nach Anspruch 13, wobei jeder Stapel (3) eine Höhe h aufweist, für die gilt: $0{,}05 \leq h/D \leq 0{,}15$.

**15.** Behälter (1) nach einem der Ansprüche 1 bis 14, wobei der oder jeder Stapel (3) zwischen zwei aufeinander folgenden Schichten (2) dergestalt angeordnet ist, dass er obere Schichten (2) und untere Schichten (2) beiderseits des entsprechenden Stapels (3) abgrenzt, wobei der oder die Stapel (3) in dem geschlossenen Raum (10) dergestalt verteilt angeordnet sind, dass die oberen Schichten (2) und die unteren Schichten (2), die von dem oder den Stapeln (3) abgrenzt werden, in dem geschlossenen Raum (10) gleiche Rauminhalte mit einer Toleranz von 15% einnehmen.

## Claims

**1.** Heat storage tank (1) comprising:

- a housing (10) comprising an inner surface (100) demarcating a heat storage volume;
- layers (2) of solid elements of a storage material, the storage material being suitable to store the heat of a heat transfer fluid flowing in the housing (10), the layers (2) occupying the volume of the housing (10);
- at least one stack (3) of solid elements of a heat conducting material, the stack (3) being fitted between two successive layers (2);

the tank (1) being **characterized in that** it comprises separating means configured to separate the solid elements of the layers (2) and the solid elements of the stack (3), and **in that** the separating means are configured to allow the heat transfer fluid to flow through the stack (3).

**2.** Tank (1) according to claim 1, wherein the separating means comprise:

- a rim (4) extending on a circumference of the inner surface (100) of the housing (10);
- pressing means (5) arranged to press the rim (4) against the inner surface (100) of the housing (10).

**3.** Tank (1) according to claim 2, wherein the pressing means (5) comprise a spring compressed against the rim (4).

**4.** Tank (1) according to one of claims 1 to 3, wherein the stack (3) is fitted between two successive layers (2) so as to demarcate top layers (2) and bottom layers (2) on each side of the stack (3); and the separating means comprise:

- a top screen (6b) fitted between the top layers (2) and the stack (3), and
- a bottom screen (6a) fitted between the stack (3) and the bottom layers (2).

**5.** Tank (1) according to claim 4, wherein the top screen (6b) comprises meshes designed to retain solid elements of the top layers (2); the bottom screen (6a) comprises meshes designed to retain solid elements of the stack (3); the meshes of the top screen (6b) and of the bottom screen (6a) being designed to allow the heat transfer fluid to flow through the stack (3).

**6.** Tank (1) according to one of claims 1 to 5, wherein the housing (10) is made from a material presenting a coefficient of thermal expansion $\alpha_1$; the storage material presents a coefficient of thermal expansion $\alpha_2$ verifying $\alpha_2 < \alpha_1$; the heat conducting material presents a coefficient of thermal expansion $\alpha_3$, the heat conducting material being chosen so that $\alpha_2 < \alpha_1 \leq \alpha_3$.

**7.** Tank (1) according to one of claims 1 to 6, wherein the housing (10) comprises a bottom part (10a) and a top part (10b); the tank (1) comprises:

- first and second distributors (11a, 11b) of the heat transfer fluid respectively arranged in the bottom part (10a) and in the top part (10b) of the housing (10);
- additional stacks (3a, 3b) of solid elements of the heat conducting material, the additional stacks (3a, 3b) being arranged so as to envelop the first and second distributors (11a, 11b).

**8.** Tank (1) according to one of claims 1 to 7, wherein the solid elements of each stack (3) comprise balls, preferably presenting a diameter comprised between 5 mm and 50 mm.

**9.** Tank (1) according to one of claims 1 to 8, wherein each stack (3) presents a porosity comprised between 30% and 50%.

**10.** Tank (1) according to one of claims 1 to 9, wherein the heat conducting material is a metal, preferably a steel.

**11.** Tank (1) according to one of claims 1 to 10, wherein the solid elements of the layers (2) comprise rocks and preferably sand, the rocks preferably being alluvial.

**12.** Tank (1) according to one of claims 1 to 11, wherein the heat transfer fluid is a liquid or gas, the liquid preferably being an oil, the gas preferably being air.

**13.** Tank (1) according to one of claims 1 to 12, wherein the inner surface (100) of the housing (10) forms a cylinder presenting a height H and a diameter D; the cylinder preferably verifies $1 \leq \frac{H}{D} \leq 2.5$; more preferentially $1.5 \leq \frac{H}{D} \leq 2.5$; ^ and even more preferentially $2 \leq \frac{H}{D} \leq 2.5.$

**14.** Tank (1) according to claim 13, wherein each stack (3) presents a height h verifying $0.05 \leq \frac{h}{D} \leq 0.15.$

**15.** Tank (1) according to one of claims 1 to 14, wherein the or each stack (3) is placed between two successive layers (2) so as to demarcate top layers (2) and bottom layers (2) on each side of the corresponding stack (3); the stack or stacks (3) are arranged in the housing (10) in such a way that the top layers (2) and bottom layers (2) demarcated by the stack or stacks (3) occupy equal volumes in the housing (10) with a tolerance of 15%.

1
D
11b
74
76
78
80
78
70
72
$E_C$
$E_F$
2
10
H
11a

Fig. 1

Fig. 2

D
10
1
100
2
4
5
3
6b
6a
h
4
5
6a

Fig. 3

1
10
10b
D
4
6b
4
5
6a
100
H
10a
4
5
Fig. 4
1
10b
10
100
10a
3a
$E_F$
11a
Fig. 5
1
11a
3a
100
$E_F$
Fig. 6

1
10b
11b
$E_C$
3b
6'
2
100
6b
3
6a
2
6b
3
6a
2
6'
10a
3a
11a
$E_F$
1
3'
$h_2$
100
2
3
$h_1$
2
$h_2$
3'
2

Fig. 7

Fig. 8

Fig. 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 4405010 A